# EUROPEAN PATENT APPLICATION

(11) **EP 3 597 721 A1**
(43) Date of publication of application: **22.01.2020**
(21) Application number: 18184260.0
(22) Date of filing: 18.07.2018
(51) Int. Cl.: C09K 11/02, C08J 5/00

(54) **PHOTO-EMISSIVE NANOCLUSTERS ENCAPSULATED IN NANO-CAVITIES OF AMPHIPHILIC BLOCK COPOLYMER VESICLES AND METHODS OF THEIR PREPARATION**

(71) Applicant: SABIC Global Technologies B.V., 4612 PX Bergen op Zoom (NL)
(72) Inventor: FARAH, Abdiaziz, 23955-6900 Thuwal (SA)
(74) Representative: Elzaburu S.L.P.

(57) **Abstract**

A photo-emissive composite may include an amphiphilic block copolymer exhibiting one or more of micelle or vesicle morphology transition with compartmentalized reactive cavities of controlled sizes and a plurality of stable quantum dots encapsulated in the compartmentalized reactive cavities of the block copolymer.

## Description

### FIELD OF THE DISCLOSURE

The present disclosure relates to quantum dot technology, and in particular to encapsulated photo-emissive nanoclusters.

### BACKGROUND OF THE DISCLOSURE

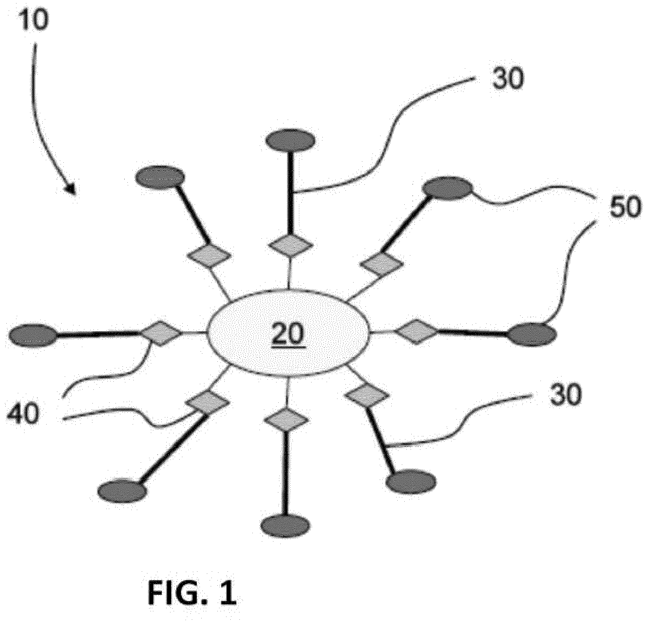

Quantum dots are used in various applications, including optical and display applications. As shown in FIG. 1, a typical quantum dot structure 10 includes a quantum dot 20 surrounded by ligands 30 that prevent aggregation and hence good dispersion in a polymer matrix in which the quantum dot structure 10 is included. In certain quantum dot structures 10 the ligands 30 are long chain alkyl/alkylaryl groups with donor atoms 40 and a reactive functional group 50. The donor atoms 40 form bonds with the quantum dot 20 and the reactive functional groups 50 and help to retain the quantum dot-ligand complex in the polymer matrix in which the quantum dot structure 10 is included. In particular applications the quantum dot structure 10 forms a part of a quantum dot enhancement film (QDEF). The quantum dot structure 10 described herein, however, does not protect the quantum dot 20 and articles (e.g., a QDEF) including the quantum dot structure 10 from air and moisture. Instability of the quantum dot structure 10 from air and moisture affects the optical properties of the quantum dot structure 10 and articles (e.g., a QDEF) including the quantum dot structure, making it not suitable for display applications.

Over the last two decades, cadmium telluride (CdTe) quantum dots (QDs) have been the subject of devoted research attention due to their high quantum efficiency, multicolor availability, tunable surface, and size controlled properties. Because of these structural and surface properties, CdTe (QDs) have numerous applications in solid-state lighting, displays, optical communications devices, sensors and, more importantly in biological applications relevant to imaging and diagnostics.

Currently, many synthetic strategies are adopted to prepare CdTe (QDs) of controlled sizes and excellent photo stability. These strategies can be divided mainly into three categories: the first method uses "cap exchange" and entails the substitution of native Trioctyl phosphine oxide (TOPO) stabilized QDs with bifunctional ligands, each providing a surface anchoring group to bind the inorganic QD surface such thiols, and an opposing hydrophilic end group such as hydroxyl or carboxyl groups to achieve water compatibility. The second strategy involves the formation of polymerized silica shell functionalized with polar groups that insulate the hydrophilic surface of the QDs. The third approach preserves the TOPO on the QD surfaces and uses variants of amphiphilic diblock or triblock copolymers and phospholipids to tightly encapsulate the alkyl phosphine ligands through hydrophobic attractions, whereas the hydrophilic outer block units allow aqueous dispersion and further functionalization reactions.

Among these strategies, aqueous based synthetic methods are more reproducible, cost-effective, and less toxic and the as-prepared QDs are more biocompatible. Synthetically, the ability to make these QDs water soluble feasible and utilize them easily for specific water based reactions such as bioconjugation to a specific biomolecule of interest has lent them to be unique in niche applications requiring their use in cellular labeling, deep tissue imaging, and as efficient fluorescence energy transfer donor systems. However, these QDs are recognized in the art as being incompatible in an organic phase medium and could not be used in optoelectronic device and display applications. Therefore, improvements are needed.

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a representation of a prior art quantum dot structure.
FIG. 2A illustrates a core-shell structure of cadmium telluride (CdTe) QDs with molecular structures of used stabilized ligands.
FIG. 2B illustrates UV-Vis spectra of CdTe QDs (inset: fluorescence images of CdTe QDs solution with different capping ligands).
FIG. 2C illustrates photoluminescence (PL) of CdTe QDs in accordance with aspects of the present disclosure.
FIG 3A illustrates PL profiles of thioglycolic acid (TGA) stabilized CdTe QDs at different reaction times.
FIG. 3B illustrates transmission electron microscopy (TEM) of TGA stabilized CdTe QDs (2h).
FIG. 3C illustrates TEM of TGA stabilized CdTe QDs (1h).
FIG. 4A illustrates high resolution XPS spectra and fitted peaks of C 1s of CdTe QDs in polymer matrix.
FIG. 4B illustrates cadmium 3d of CdTe QDs.
FIG. 5A illustrates high resolution X-ray photoelectron spectroscopy XPS spectra and fitted peaks of Te 3d of CdTe QDs in polymer matrix.
FIG. 5B illustrates high resolution XPS spectra and fitted peaks of sulfur 2p of CdTe QDs in polymer matrix.
FIG. 6 illustrates synthesis of (polystyrene-B-polymethacrylic acid) (PS-b-PMAA) copolymer.
FIG. 7 illustrates a (PS-b-PMAA) diblock vesicle aggregate formation and CdTe QDs encapsulation procedure.
FIG. 8A-8B illustrate scanning electron microscope (SEM) images of (PS-b-PMAA) diblock spherical micelles before water addition.
FIG. 8C-8D illustrate a (PS-b-PMAA) diblock spherical vesicle after 15% and 5% water addition, respectively.
FIG. 9A illustrates AFM images of (PS-b-PMAA) diblock vesicles after 15% water addition.
FIG. 9B illustrates an enlarged SEM image of (PS-b-PMAA) diblock vesicles after 15% water addition.
FIG. 9C illustrates a TEM image of (PS-b-PMAA) diblock vesicles with a dilute CdTe QDs water solution.

### SUMMARY

In the present disclosure, a photo-emissive composite may include an amphiphilic block copolymer exhibiting one or more of micelle or vesicle morphology transition with compartmentalized reactive cavities of controlled sizes and a plurality of stable quantum dots encapsulated in the compartmentalized reactive cavities of the block copolymer. Stable quantum dots, as used herein, may be defined as quantum dots that do not leach (or have minimized leaching) from the nanocavities of the block copolymer when nanocomposites are subjected to one or more solution processing steps.

A method of preparing a photo-emissive composite may comprise providing an amphiphilic block copolymer exhibiting one or more of micelle or vesicle morphology transition with compartmentalized reactive cavities of controlled sizes and encapsulating a plurality of stable quantum dots in one or more of the compartmentalized reactive cavities of the block copolymer.

In an example aspect, PS-b-PMAA block copolymers with unique nanocavitated vesicle structures in THF/water solution are capable of entrapping inorganic semiconducting CdTe QDs of (e.g., 3-5 nanometer (nm)) sizes into specific loci of the copolymer. As encapsulated, the QDs may be transferred and processed into the organic phase. In some aspects the PS-b-PMAA block copolymers include PS₂₇₅-B-PMAA₈₅.

As illustrated herein, the solution-phase exchange from short ligands to functional polymeric type materials can produce a sufficiently stable colloids. Additionally or alternatively, quantum-size-effect tunability, and smooth morphology of the nanoclusters can be preserved, alongside improved optical and electronic transport properties.

### DETAILED DESCRIPTION

The present disclosure can be understood more readily by reference to the following detailed description of the disclosure and the Examples included therein. In various aspects, the present disclosure pertains to a photo-emissive composite, which may include an amphiphilic block copolymer exhibiting one or more of micelle or vesicle morphology transition with compartmentalized reactive cavities of controlled sizes and a plurality of stable quantum dots encapsulated in the compartmentalized reactive cavities of the block copolymer.

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a quantum dot" includes mixtures of two or more quantum dots.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

As used herein, the terms "optional" or "optionally" means that the subsequently described event or circumstance can or cannot occur, and that the description includes instances where said event or circumstance occurs and instances where it does not. For example, the phrase "optional additional additives" means that the additional additives can or cannot be included.

Disclosed are the components to be used to prepare the compounds of the disclosure as well as the compounds themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compounds of the disclosure. Thus, if there are a variety of additional steps that can be performed it is understood that each of these additional steps can be performed with any specific aspect or combination of aspects of the methods of the disclosure.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compounds disclosed herein have certain functions. Disclosed herein are certain structural requirements for performing the disclosed functions and it is understood that there are a variety of structures that can perform the same function that are related to the disclosed structures, and that these structures will typically achieve the same result.

### CdTe QDs selection

Reference is made herein to CdTe QDs. However, it is understood that other QDs may be used. Certain QDs, such as CdTe QDs, may exhibit narrow and tunable absorption and emission bands through good DOE (reaction time, reflux temperature, type of stabilizing ligands. Certain QDs, such as CdTe QDs, may exhibit bright luminescence with wide range of energy (e.g., variable peak positions (500-630 nm). Certain QDs, such as CdTe QDs, may exhibit excellent photo stability (e.g., immune of broadening during polymer encapsulation) and a narrow full-width half maximum (FWHM) line.

### Nano cavitated (PS-b-PMAA) block morphologies

Reference is made herein to PS-b-PMAA block copolymers exhibiting nanocavities. However, other materials (e.g., polymers) may be used and may exhibit nano-cavities that may be functional in the manners described herein. Nano-cavitated (PS-b-PMAA) block offer control over the diffusion of reagents (QDs) into the micelles and possibility of tethering coordinating ligands/moieties into to the polymer cavities irreversibly. Block copolymer nano-carriers provide nano-engineered multiple binding sites for simultaneous interactions with QDs. Block copolymer nano-carriers provide less agglomeration of the adsorbed QDs (excellent encapsulating and good dispersion capacity media). The critical micelle concentration (CMC) of block copolymers is typically smaller than common surfactants or liposomes. Nano-cavitated (PS-b-PMAA) block offer control of micelle stability, polymer concentration, temperature, and solvent (tailorable materials processing parameters). Nano-cavitated (PS-b-PMAA) block offer less processing steps to achieve multi-layered adsorption of QDs. Cavitated (PS-b-PMAA) block micelles/vesicles offer control of the micelle size/morphologies through manipulation of Mw composition, chemistry/process, and choice of solvent as well as molecular architecture. QDs can be confined or attached to specific loci of the block copolymer/core/shell.

### Materials fabrication and processing:

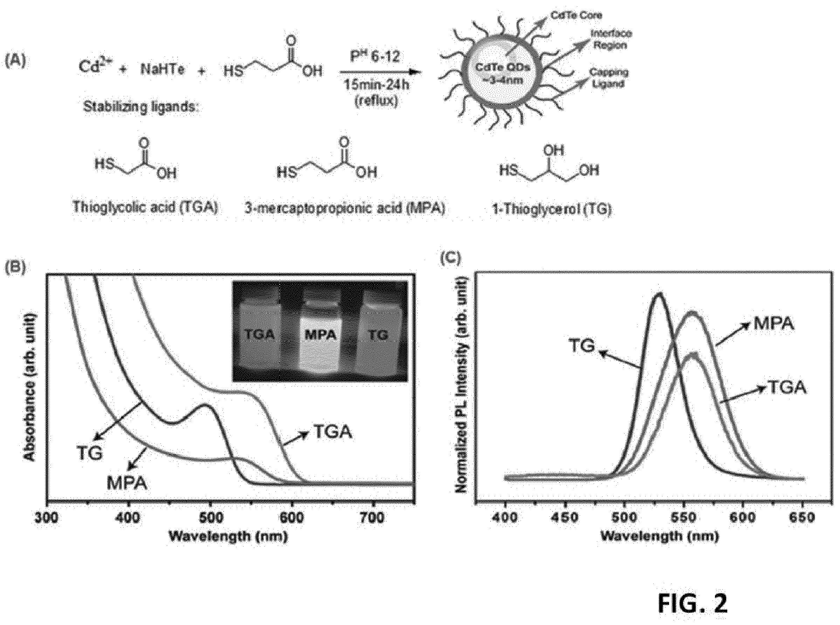

**Synthesis of thiol capped CdTe NCs:** Chemicals: Sodium Borohydride (NaBH4, 99%), tellurium powder (-200 mesh, 99.8%), cadmium chloride 99%, thioglycolic acid (TGA, 98%), 3-mercaptoproponionic acid (MPA, 99%), and thioglycerol (99%) were all purchased from Aldrich chemicals and were used as received. Millipore Q water (18 sm) was used throughout the nanoparticle (NC) synthesis. The effects of various experimental variables were examined including the reaction and reflux time, and pH value on the particle growth and corresponding optical properties. The scheme of CdTe NCs is shown in **(****FIG. 2****).** As an example, QD synthesis and molecular characterization can be found in (Farah et.al. ACS Nano 2011, 5, 3823-3830).

**Synthesis of TGA capped CdTe NCs (CdTe-TGA):** It is understood that the described synthesis is a representative example. Other synthesis routes may be used. 300 milligrams (mg) (7.90 millimole (mmol)) of NaBH4 was dissolved in 10 milliliter (ml) of water in an argon environment and cooled in an ice bath. 400 mg (3.14 mmol) of tellurium powder was added and the reaction mixture was left stirring for 2 hours (h) to get a deep pink-purple clear solution. The resulting NaHTe solution was kept under argon before use. 1.15 g (6.28 mmol) of CdCl2 was then dissolved in 70 ml of Millipore water and argon was bubbled through the solution for 20 min. 1 mL (15.08 mmol) of TGA was slowly added to this solution resulting in the formation of white precipitate due to the formation of Cd-TGA complex in the solution. (This precipitate will not dissolve not until the pH value of the solution reaches well above 10.2). The pH value of the solution was adjusted to 11.0 by dropwise addition of 2.0 M NaOH solution with stirring. The freshly prepared NaHTe solution was then rapidly added to the Cd precursor solution at room temperature. After continuous stirring at room temperature for 10 minutes, the resulting orange solution was refluxed for a given time (0.5 min to 20 h) and then cooled to room temperature. The obtained CdTe NCs were precipitated by the addition of reagent grade acetone and were isolated and purified by repeated cycles of precipitation/centrifugation and dried in vacuum at room temperature for overnight and then characterized.

**Synthesis of MPA capped CdTe NCs (CdTe-MPA):** As another example, CdTe-MPA capped NCs were prepared as described above using: 400 mg of tellurium powder, 297 mg of NaBH₄, 1.15 g of CdCl₂ and 1.15 mL of MPA.

**Synthesis of TG capped CdTe NCs (CdTe-TG):** As a further example, CdTe-TG capped NCs were prepared as described above using: 565 mg of tellurium powder, 420 mg of NaBH₄, 1.0 g of CdCl₂ and 1.62 mL of TG.

As illustrated in **(FIG. 2B-2C),** the UV-vis absorption and PL spectra of CdTe QDs with different capping ligands under identical experimental conditions exhibit different spectra profiles and hence different quantum confinement properties. At the same refluxing time and reaction temperature, the excitonic absorption and PL emission peaks are ligand-dependent and systematically shifts to longer wavelengths.

TG stabilized nanoclusters display narrow PL peak position at 525 nm and with smallest full-width half-maximum (FWHM) in the order of 25-30 nm, when compared with TGA and MPA stabilized CdTe QDs revealing both broad PL peak position at 575 and with full width-half-maximum (FWHM) of 50 nm. This observation clearly indicates that there is different nanocrystal growth rate and size distribution among these different ligands stabilized QDs.

The growth rate observed for TGA and MPA stabilized CdTe QDs, are the lowest under the same refluxing conditions. We attribute this special behavior of TGA and MPA stabilized CdTe QDs due to steric hindrance of carboxyl group and its stronger tolerance to thermal decomposition under prolonged reaction time. In addition, the partial hydrolysis (protonation) of carboxyl and thiol functional groups with high PH reaction environment causes the incorporation of sulfur in the interior and surface of the CdTe nanocrystals, thereby forming highly stable CdTe/CdS core/shell structures at early stages of the reaction time.

As for TG stabilized CdTe QDs, the PL spectra profile becomes slightly narrower and less sensitive with reaction time, while a further broadening is observed for both TGA and MPA stabilized CdTe QDs. Broad size distributions can be suppressed if post-preparative size-selective precipitation technique is adopted. Using this approach, different aliquots of TGA stabilized CdTe QDs were taken from the reaction vessel and analyzed after purification steps.

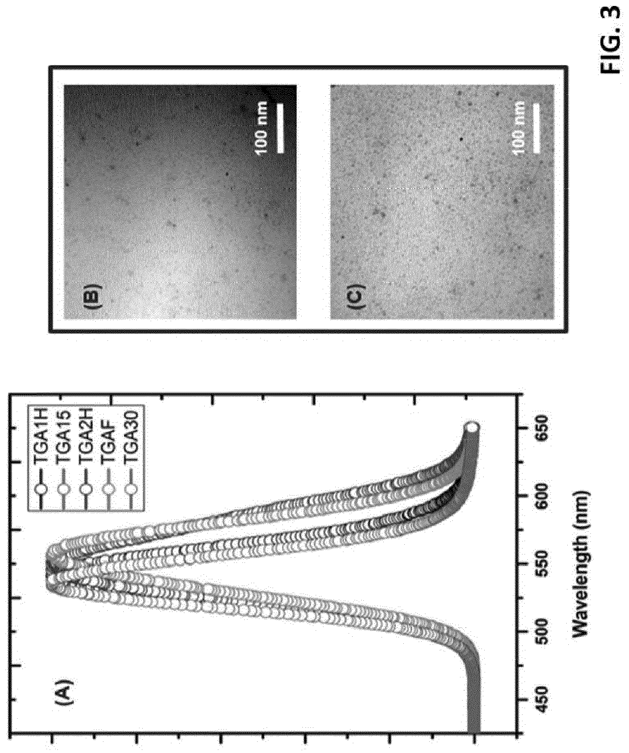

As illustrated in **(****FIG. 3A****),** under prolonged reflux reaction time, PL profiles of TGA stabilized CdTe QDs at different reaction times shift to longer wavelengths with concomitant broad size distribution and inevitable nanocluster aggregation. The smaller the full width-half-maximum (FWHM) of the PL spectra profile, the narrower the QDs size distribution and hence the brighter the expected light out from AC EL device for these nanoclusters. The TEM images in **FIG. 3B-3C** and the AC EL device light output for this TGA stabilized CdTe QDs at different reaction as shown in **FIG. 3D-3E** both corroborate this observation. At longer reflux reaction times, nanoclusters tend to agglomerate and have unfavorable adsorption-desorption equilibria associated with the Ostwald ripening phenomenon. This can lead to incomplete passivation of surface trap states of the QDs, resulting in lower AC EL device light output.

**XRD measurements** allow for identification of crystalline phases in this ligand-stabilized CdTe QDs. The XRD results displayed broad features with no sharp crystalline peaks characteristic in crystalline materials. The XRD results revealed three diffraction patterns centered at 24.6°, 40.7°, and 48.3° attributed to diffraction lines characteristic of wurzite and zinc blends typical for CdTe nanoclusters, respectively.

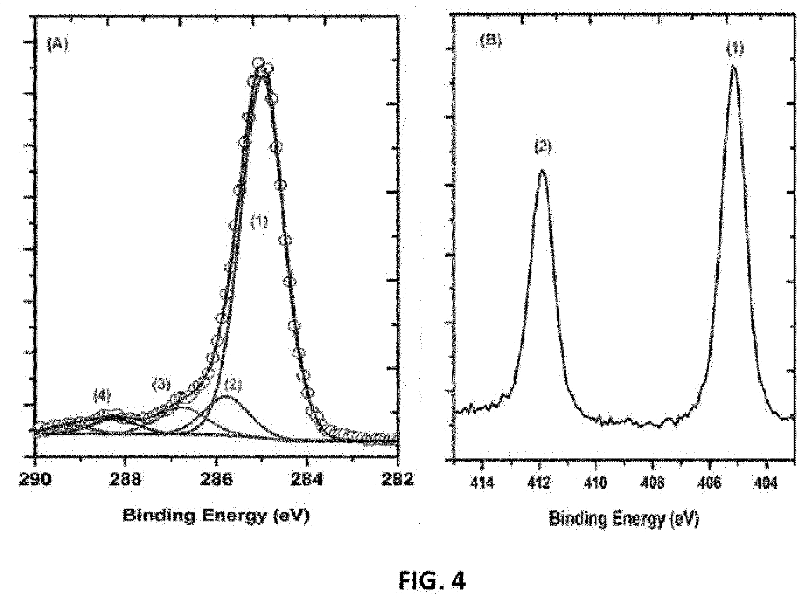

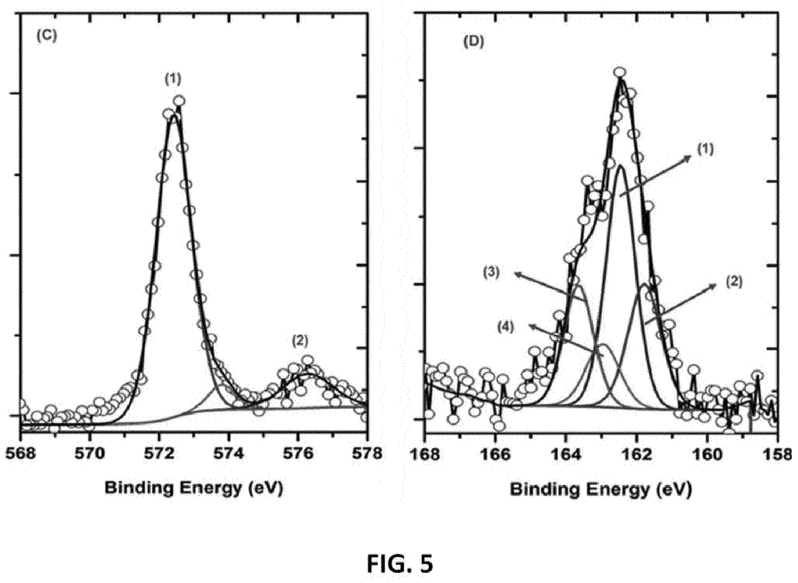

**X-ray photoelectron spectroscopy:** it was observed that the surface chemistry is highly dependent upon the conditions used to prepare the nanoclusters and thereafter entrapping into nano-cavitated vesicle polymer structures. Overall XPS spectra of all samples show that the principal core features can be attributed to C Is, O Is, S 2p, Cd 3d, and Te 3d. The atomic metallic composition of CdTe QDs surfaces after encapsulating into the polymer matrix attenuates due to the increasing polymer thickness surrounding the core-shell type CdTe QDs structures. **(****FIG. 4A****)** displays a XPS high-resolution spectrum of C1s in the polymeric matrix. The core level C1s spectra of these samples is deconvoluted into four components with binding energies at 285 electron volts (eV), (C-C) 285.93 eV (O-CO-C), 286.89 eV (C-O) and 288.53 eV ((O)-C=O), respectively. These are consistent with the incorporation of ligand-stabilized CdTe QDs into an organic polymer-encapsulating matrix. The presence of the Cd 3d_{5/2} peak at 405.46 eV and Cd 3d_{3/2} at 412.20, clearly indicate that Cd exist in the form of CdTe as depicted in **(****FIG. 4B****).** No change in the shape or the position maxima of such deconvoluted peaks were observed during the encapsulation process, suggesting that Cd and Te are still bound together. It is known that polymer encapsulation of CdTe NPs provides a closely packed shell that hinders the oxygen diffusion into the CdTe core structure. However, noticeable intensity variations of Te peaks due to oxide formation were observed due to inevitable surface oxidation. Depending on the extent of surface coverage, not only the composition of the NPs can be greatly affected but also their ability to antioxidation. As depicted in **(****FIG. 5C****),** the peak at 572.63 is attributed to Te 3d_{5/2} in the form of CdTe and that of 576.55 to Te 3d_{3/2} oxidized to TeO₂. The O 1s deconvoluted peaks present very complex pattern (not shown) due to different electron charge distribution around (-O-C=O-) bond of the polymer structure. The strongest peak being centered at 531.9 eV that is assigned to (C-O-C) component of the polymer structure. The O 1s core level high-resolution spectra also demonstrated two deconvoluted peaks at 532.41 and 533.81 eV respectively. The intensity of the peak at higher binding energy (533.81 eV) which is attributed to the unbound (OH) groups of the organic polymer layer, as expected attenuates as more CdTe nanoclusters are encapsulated into the polymer structure. These peak components are specifically assigned to the polymethacrylic acid chains attesting the integration of protective organic polymer layer onto the CdTe NP surface.

The shift of the Cd binding energy, caused by the change in its coordination situation with sulfur or tellurium, supports the formation of a CdS shell on the surface of CdTe QDs. As shown in **(****FIG. 5D****),** the S 2p region is fitted with two distinct doublets. The sulfur signal exhibits two main peaks at 161.8 and 163.9 eV, which are consistent, respectively, with the S 2p_{3/2} of the bound thiolate and unbound sulfur on the CdTe nanocluster surface. For each main peak, there is a contribution from the S 2p_{1/2} emission, with half of the area of the S 2p_{3/2} peak and situated at 1.2 eV higher binding energy. For the bound thiolate peak, this contribution is included in the 162.8 eV peak, whereas the contribution from the unbound sulfur can be observed at 163.9 eV. These results clearly demonstrate the formation of surface CdS nanoclusters that are tightly bound to core CdTe QDs.

From XPS analysis, it is determined that the overall compositions of these nanoparticles are still intact with minimal susceptibility to leak out from the polymer nanocavities.

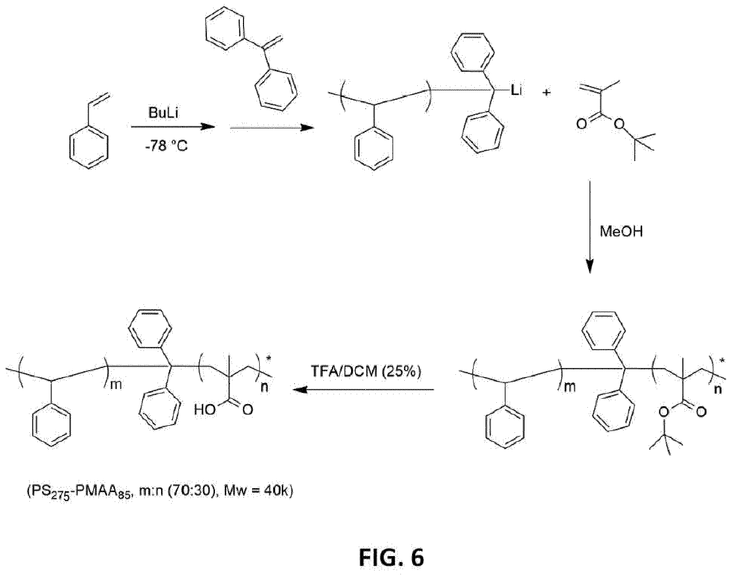

**Polystyrene-B-polymethacrylic acid (PS₂₇₅-B-PMAA₈₅) diblock synthesis**: Although other synthesis routes are possible, (PS₂₇₅-B-PMAA₈₅) copolymer synthesis was achieved as shown in scheme **(****FIG. 6****)** with minor modification to the literature procedure by (Russel et.al. Macromolecules 2002, 35, 4271-4276) with relative volume fraction of each copolymer maintained at a ratio of about 70:30 as following:
**Diphenylethylene end capped polystryl homopolymer:** A flame-dried, nitrogen purged 250 mL three neck flask was charged with 150 mL of dry THF and cooled to - 78 degrees Celsius (°C) under nitrogen. 0.20 mL of 1.0 mol/L of S-BuLi was added via syringe. 10.0 mL of freshly of distilled styrene was then added with a syringe while rapidly stirring at - 78°C for 10 min. Concurrently, a second 50 mL flame dried and nitrogen purged flask was charged 5 mL of THF and (1.5 equiv. of diphenylethylene (DPE) to S-BuLi), and was cooled at -78 °C until a slight persistent purple color is observed. The DPE adduct solution was then added to the polystyrl-lithium solution via cannula (very carefully) forming a deep purple solution and was stirred at -78 °C for an additional 10 min. 1-3 mL aliquote of this solution was taken and added to 5 mL of degassed methanol. The resulting faintly yellow solution was then precipitated in 10 mL of methanol and dried in vacuo: GPC (PS standard) Mnₐᵥ: 28K Mw/Mn: 1.13) the polymer was also characterized with ¹H-NMR and FTIR spectroscopy confirming the expected structure of the homopolymer.

**Synthesis of (PS-B-tert-Butyl methacrylate):** 10.0 mL of freshly distilled tert-Butyl methacrylate in 50 mL of THF at -78°C was added slowly via syringe under rapid stirring to the polystyryl lithium-DPE capped solution. After the solution was allowed to react under vigorous left stirring at -78°C for an additional 15 mins, 1.0 mL of degassed methanol was added via syringe, and the polymer was then precipitated into 1.0 L of methanol, filtered and dried in vacuo. GPC (PS standard) Mnₐᵥ: 12.0 K Mw/Mn: 1.17. Characterizations based on¹H and ¹³C-NMR and FTIR spectroscopy confirmed the expected molecular structure of the copolymer.

**Synthesis of (PS₂₇₅-B-PMAA₈₅) diblock copolymer:** This final copolymer was obtained through hydrolysis of (PS-B-tert-Butyl methacrylate) with 25% Trifluoroacetic acid in dichloromethane for 4h and then precipitated into cold methanol, filtered and vacuo dried. ¹H and ¹³C-NMR and FTIR spectroscopy confirmed the expected structure of the copolymer.

**(PS-b-PMAA) diblock vesicle formation protocols:** Solution self-assembly of amphiphilic (PS-b-PMAA) block copolymers into diverse micelle morphologies, including spheres and vesicles will be utilized in this invention disclosure. In particular, (PS-b-PMAA) block copolymer vesicles offer unique structure of a robust internal aqueous bilayer-encapsulating compartment, which makes them excellent candidates as nanoscale carriers. In this instance, it is an excellent carrier platform to transfer water soluble CdTe QDs into an organic phase/medium for further processing and fabrication of photo-emissive display device. In general, block copolymer vesicles production requires stringent diblock copolymer structural and morphology requirements to be met, and has mainly relied on optimizing processing chemical conditions, block copolymer composition, choice of solvent, water content and many others in order to fine-tune intermolecular forces required for specific self-assembled morphology outcome. In some aspects the block copolymer is selected to have a chain length that so as to provide nanocavity sizes that are compatible to the QD sizes. In further aspects the transferred water soluble QDs in the organic phase allow for tight encapsulation of the QDs and transfer to the organic medium, which provides for enhanced dispersion of QDs, minimized leaching of the QDs and stable photochemical properties of the photo-emissive display device.

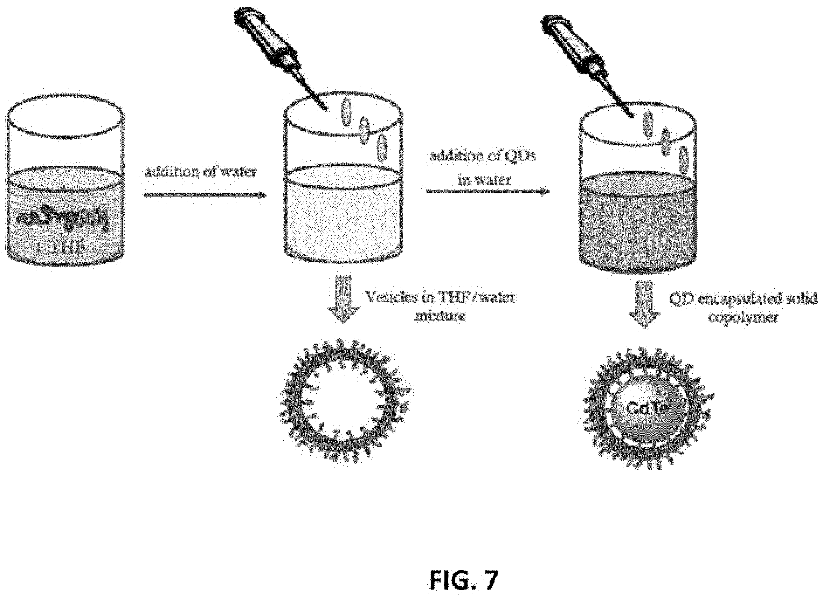

**(PS-b-PMAA) diblock vesicle aggregate:** The characteristics and composition of (PS₂₇₅-B-PMAA₈₅) diblock used in this invention are shown in **(****FIG. 6****).** As shown in **(****FIG. 7****),** (PS₂₇₅-B-PMAA₈₅) diblock was dissolved in THF to make solutions with a concentration of 0.5-5 wt %. The solutions were stirred for 5 h. To induce self-assembly, deionized water was added dropwise to the solution at a rate of 0.2 wt % per minute to the desired water content. The solutions were left stirring for 3 h and were then quenched into an excess of water before they were dialyzed against water to remove the remaining THF. In some cases, the dialyzed aggregate solutions were freeze-dried for at least 48 h under vacuum. The resulting powder was re-dissolved in water to make a solution with a concentration of ca. 1.0 x 10⁻⁴ g/mL for further analysis. The samples were stored at room temperature for further experiments if required. The rest of solution vesicles were quenched by the addition of dilute CdTe QDs solutions and collected by filtration.

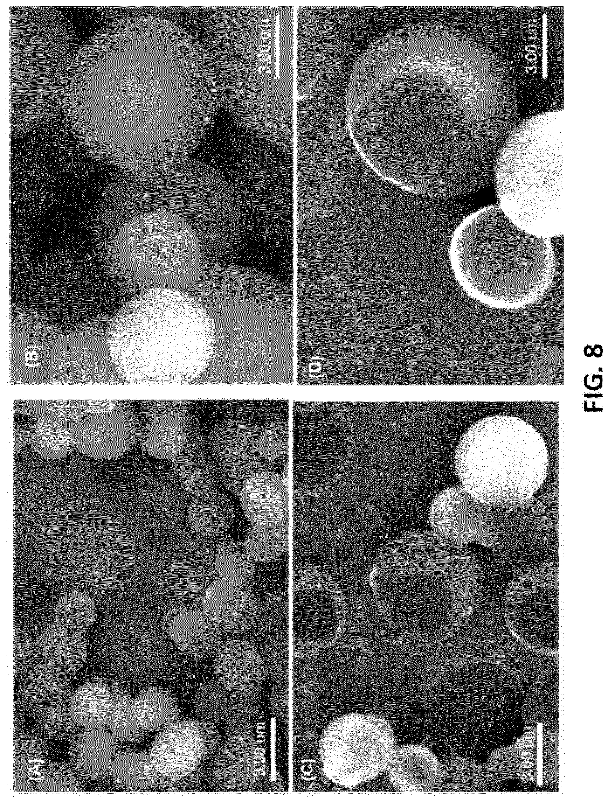

SEM images of (PS₂₇₅-B-PMAA₈₅) diblock specimen taken at different stages of self-assembling process as shown in **(****FIG. 8****)** revealed that there is an aggregate morphology change from spheres to vesicles as the water content is increased. Spheres were the only morphology seen **(FIG. 8A-8B)** when most likely all available carboxyl functional groups in the MAA content of (PS-b-PMAA) diblock are fully protonated. Both spheres and vesicles morphologies coexisted as the degree of ionization of the MAA content gradually increased **(****FIG. 8C****)** and, finally vesicles were the only morphology present when the MAA content is in fully hydrolyzed state **(****FIG. 8D****).** One plausible explanation mechanism of this observed morphological change is, most likely, the partial accumulation of the hydrophobic PS component initially at the center of the sphere, which reduces the stretching of the core chains, which, in turn, can convert vesicles or rods into spheres. When the MAA content is fully hydrolyzed, the PS block chains can probably no longer be confined to the core of the aggregates. The hydrophilicity of the COOH group on the MAA chains of (PS-b-PMAA) diblock becomes relevant and makes its localization at the interface more likely with increasing COOH content.

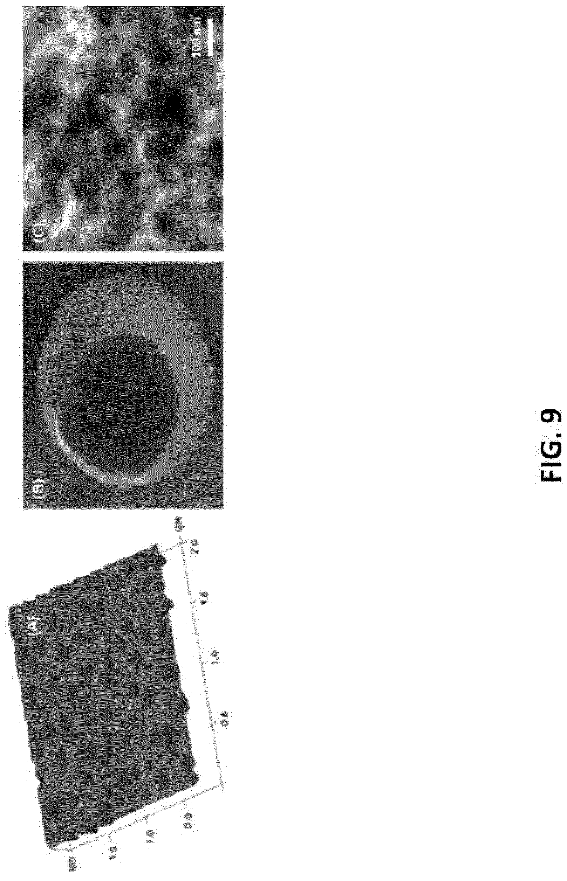

AFM images of highly hydrolyzed (PS₂₇₅-B-PMAA₈₅) diblock vesicles as in **(****FIG. 9A****)** clearly displayed nano-cavitated morphologies of almost comparable sizes (e.g., 5-15 nm) holes across the film. Enlarged SEM images of the same specimen **(****FIG. 9B****)** also revealed similar surface cavity morphology in agreement with the AFM data. After securing the expected vesicle structure formation during the amphiphilic (PS-b-PMAA) diblock self-assembling process, it was then added slowly dilute CdTe QDs solution while stirring vigorously, resulting in after repetitive dissolution/precipitation cycles with THF/water, an organic media processable CdTe QDs encapsulated amphiphilic (PS-b-PMAA) for AC EL photo-emissive device. A microtomed TEM image of such hybrid material is shown in **FIG. 9C****.** It shows that all void holes of amphiphilic (PS-b-PMAA) vesicle are now filled with high contrast CdTe QDs nanocluster as expected.

In the present disclosure, it is shown that nanocavitated (PS-b-PMAA) can successfully entrap and stabilize CdTe QDs in water over longer periods and concomitantly can transfer it into organic media. Different ligand stabilized CdTe QDs with tunable absorption and emission bands, bright luminescence and exceptional photo stability along with (PS-b-PMAA) block copolymer with narrow (MWD) were utilized in this study. This unique block copolymer under controlled micelle formation process offered very intricate micelle/vesicle morphology transition with compartmentalized reactive cavities of controlled sizes, capable of encapsulating CdTe QDs. A selective decoration of CdTe QDs in a phase-separated block copolymer system as demonstrated herein can provide a variety of structures having a unique spatial distribution of such nanoparticles in smart block copolymer matrix. It is also demonstrated for the first time the realization of robust but simple fabrication protocols of deploying solution processable hybrid organic inorganic nanocomposites for potential optoelectronic applications.

### Articles of Manufacture

In some aspects the article is a film or layer for an optical device (e.g., a light emitting device), a solar panel laser or other suitable application. In other aspects the article is a photoelectric element, such as but not limited to a quantum dot film color film, a backlight source, a sheet polarizer, a luminescent layer and a photoelectric converting device. In still other aspects the article is a photoelectric device that has a lighting or display function, including but not limited to a lighting device, a liquid crystal display panel, an electronic paper, an organic electroluminescent display (OLED) panel, a mobile phone, a tablet computer, a TV set, a display, a notebook computer and a digital photo frame and navigator. In a particular aspect the article is a quantum dot enhancement film (QDEF).

Various combinations of elements of this disclosure are encompassed by this disclosure, e.g., combinations of elements from dependent claims that depend upon the same independent claim.

In an example aspect, AC thin-film electroluminescent lamps may be fabricated using various printing technologies, such as by screen-printing technology. As a further example, 200 mg of nanocluster was suspended in 1 mL of Dupont Luxprint 8155 screen printing vehicle. This is a thermally crosslinkable hydrophobic fluoropolymer. The suspension was then screen-printed onto 7 mil thick heat-stabilized ITO sputter coated polyester (PET) having a resistivity of 100 ohms per square (Ω/square), then thermally crosslinked at 160°C for 10 minutes in a box oven. A dielectric layer was then printed over the nanocluster film through #305/30 mesh screen to a total thickness of 22 micron (µm). The dielectric was prepared by suspending barium titanate in TGH 1018 UV curable screen-printing vehicle. A back electrode was then printed from colloidal silver in UV curable screen-printing vehicle to a thickness of 18 µm. All layers were crosslinked under a Vitran 300 W Hg vapor lamp.

### Aspects of the Disclosure

In various aspects, the present disclosure pertains to and includes at least the following aspects.
Aspect 1: A photo-emissive composite comprising: an amphiphilic block copolymer exhibiting one or more of micelle or vesicle morphology transition with compartmentalized reactive cavities of controlled sizes; and a plurality of stable quantum dots encapsulated in the compartmentalized reactive cavities of the block copolymer, wherein the stable quantum dots are solution processable, and wherein the amphiphilic block copolymer is capable of concomitantly transferring the plurality of quantum dots into organic media.
Aspect 2: The photo-emissive composite of aspect 1, wherein the amphiphilic block copolymer comprises polystyrene-B-polymethacrylic acid (PS-b-PMAA) block copolymers.
Aspect 2A: The photo-emissive composite of aspect 2, wherein the polystyrene-B-polymethacrylic acid (PS-b-PMAA) block copolymers comprise PS₂₇₅-B-PMAA₈₅.
Aspect 3: The photo-emissive composite of any one of aspects 1-2A, wherein the plurality stable quantum dots comprise CdTe quantum dots.
Aspect 4: The photo-emissive composite of any one of aspects 1-3, wherein the plurality stable quantum dots comprise capped nanoparticles.
Aspect 5: The photo-emissive composite of aspect 4, wherein the nanoparticles are capped with at least one thiol and a hydroxyl or carboxyl group comprising TGA, MPA or TGA.
Aspect 6: The photo-emissive composite of any one of aspects 1-5, wherein the compartmentalized reactive cavities of controlled sizes comprise cavities capable of receiving quantum dots having a size of between 3nm and 5nm.
Aspect 7: The photo-emissive composite of any one of aspects 1-6, wherein the compartmentalized reactive cavities of controlled sizes comprise cavities having a size of between 5nm and 15nm.
Aspect 8: The photo-emissive composite of any one of aspects 1-7, wherein the stable quantum dots are water processable.
Aspect 9: A method of making the photo-emissive composite of any one of aspects 1-8.
Aspect 10: A display device comprising the photo-emissive composite of any one of aspects 1-9.
Aspect 11: A method of preparing a photo-emissive composite, the method comprising: an amphiphilic block copolymer exhibiting one or more of micelle or vesicle morphology transition with compartmentalized reactive cavities of controlled sizes; and encapsulating a plurality of stable quantum dots in one or more of the compartmentalized reactive cavities of the block copolymer, wherein the stable quantum dots are solution processable.
Aspect 12: The method of aspect 11, wherein the amphiphilic block copolymer comprises polystyrene-B-polymethacrylic acid (PS-b-PMAA) block copolymers.
Aspect 12A: The method of aspect 12, wherein the polystyrene-B-polymethacrylic acid (PS-b-PMAA) block copolymers comprise (PS₂₇₅-B-PMAA₈₅) block copolymers.
Aspect 13: The method of any one of aspects 11-12A, wherein the plurality stable quantum dots comprise CdTe quantum dots.
Aspect 14: The method of any one of aspects 11-13, wherein the plurality stable quantum dots comprise capped nanoparticles.
Aspect 15: The method of aspect 14, wherein the nanoparticles are capped with at least one thiol and a hydroxyl or carboxyl group comprising TGA, MPA or TGA.
Aspect 16: The method of any one of aspects 11-15, wherein the compartmentalized reactive cavities of controlled sizes comprise cavities capable of receiving quantum dots having a size of between 3nm and 5nm.
Aspect 17: The method of any one of aspects 11-16, wherein the compartmentalized reactive cavities of controlled sizes comprise cavities having a size of between 5nm and 15nm.
Aspect 18: The method of any one of aspects 11-17, wherein the stable quantum dots are water processable.
Aspect 19: The method of any one of aspects 11-18, further comprising transferring, using the amphiphilic block copolymer, the plurality of quantum dots into organic media.
Aspect 20: The method of any one of aspects 11-19, further comprising fabricating an electro-luminescent device comprising the plurality of stable quantum dots.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

1. A photo-emissive composite comprising:
an amphiphilic block copolymer exhibiting one or more of micelle or vesicle morphology transition with compartmentalized reactive cavities of controlled sizes; and
a plurality of stable quantum dots encapsulated in the compartmentalized reactive cavities of the block copolymer,
wherein the stable quantum dots are solution processable, and
wherein the amphiphilic block copolymer is capable of concomitantly transferring the plurality of quantum dots into organic media.

2. The photo-emissive composite of claim 1, wherein the amphiphilic block copolymer comprises polystyrene-B-polymethacrylic acid (PS-b-PMAA) block copolymers.

3. The photo-emissive composite of any one of claims 1-2, wherein the plurality of stable quantum dots comprise CdTe quantum dots.

4. The photo-emissive composite of any one of claims 1-3, wherein the plurality of stable quantum dots comprise capped nanoparticles.

5. The photo-emissive composite of claim 4, wherein the capped nanoparticles are capped with at least one thiol and a hydroxyl or carboxyl group comprising TGA, MPA or TGA.

6. The photo-emissive composite of any one of claims 1-5, wherein the compartmentalized reactive cavities of controlled sizes comprise cavities capable of receiving quantum dots having a size of between 3nm and 5nm.

7. The photo-emissive composite of any one of claims 1-6, wherein the compartmentalized reactive cavities of controlled sizes comprise cavities having a size of between 5nm and 15nm.

8. The photo-emissive composite of any one of claims 1-7, wherein the stable quantum dots are water processable.

9. A display device comprising the photo-emissive composite of any one of claims 1-8.

10. A method of preparing a photo-emissive composite, the method comprising:
an amphiphilic block copolymer exhibiting one or more of micelle or vesicle morphology transition with compartmentalized reactive cavities of controlled sizes; and
encapsulating a plurality of stable quantum dots in one or more of the compartmentalized reactive cavities of the amphiphilic block copolymer, wherein the stable quantum dots are solution processable.

11. The method of claim 10, wherein the amphiphilic block copolymer comprises polystyrene-B-polymethacrylic acid (PS-b-PMAA) block copolymers.

12. The method of any one of claims 10-11, wherein the plurality of stable quantum dots comprise CdTe quantum dots.

13. The method of any one of claims 10-12, further comprising transferring, using the amphiphilic block copolymer, the plurality of quantum dots into organic media.

14. The method of any one of claims 10-13, further comprising fabricating an electroluminescent device comprising the plurality of stable quantum dots.

15. The method of any one of claims 10-14, further comprising transferring, using the amphiphilic block copolymer, the plurality of quantum dots into organic media.
